(19) Europäisches Patentamt
European Patent Office
Office européen des brevets

(11) **EP 3 336 207 A1**

(12) **EUROPEAN PATENT APPLICATION**

(43) Date of publication:
**20.06.2018 Bulletin 2018/25**

(51) Int Cl.:
***C22B 3/10*** *(2006.01)*     ***C22B 3/00*** *(2006.01)*
***C22B 11/00*** *(2006.01)*

(21) Application number: **16204346.7**

(22) Date of filing: **15.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA MD**

(71) Applicant: **Solvay SA**
**1120 Brussels (BE)**

(72) Inventor: **COEL, Philippe**
**1090 Brussels (BE)**

(54) **PROCESS FOR LEACHING A NOBLE METAL**

(57)     Process for leaching a noble metal from a source thereof, said process comprising the following steps:
- reacting a bromide with hydrogen peroxide in order to generate bromine;
- transferring said bromine into a leaching tank; and
- adding the noble metal source and a bromide into the leaching tank and leaching out at least part of the noble metal from its source.

Figure 1

## Description

The present invention relates to a process for leaching a noble metal, more precisely gold.

Gold and other precious metals have traditionally been recovered from ores by leaching with an alkaline cyanide solution. However, this technology suffers from several drawbacks including low leaching rates and severe environmental restrictions considering the well-known toxicity of cyanide.

The bromine/bromide leaching of gold constitutes an alternative that is known since the 19th century. Leaching rates are higher than with the cyanide technology and provided the problems associated with the high vapour pressure and corrosive nature of bromine are taken care of, the process is also much less toxic.

The Conference Paper "Study of gold leaching with bromine and bromide and the influence of sulphide minerals on this reaction" (M. Melashvili et al., Conference: COM 2014, October 2014) published on ResearchGate under the number 274082083, details one way of dealing with that problem, namely: by using organic based bromine carriers. This paper also deals with economic considerations and states that the viability of an industrial process using this technology will require that the bromide ions are re-oxidized to bromine, which according to the authors is most likely to be achieved electrolytically.

On the other hand, the oxidation of bromide into bromine using hydrogen peroxide is known (see for instance US 5,266,295 which is not related to hydrometallurgy but instead to organic synthesis). However, the Applicant noticed that merely treating recycled liquor hence still containing bromide with hydrogen peroxide did not allow efficient bromide generation because of the many parasite/competing reactions taking place.

US 2014/0230604 describes a process for the recovery of noble metals from ores or other sources including rubbish, said process using an oxidizing solution containing ozone, persulphate anions and anions selected from chloride, bromide, iodide and nitrate. In some embodiments, hydrogen peroxide is also present as oxidizing agent. In this document, recycling of the liquor obtained after metal recovery is foreseen. However, except addition of new reagents to this liquor, no treatment of said liquor is described. Although it could be that some bromine is generated in the process, this document does not at all address this issue. Besides, since hydrogen peroxide is at the best added together with all other ingredients (including the recycled liquor) when the oxidizing solution is formed, it is very likely that bromine generation (if any) is very limited.

Therefore, the invention relates to a process for leaching a noble metal from a source thereof, said process comprising the following steps:

- reacting a bromide with hydrogen peroxide in order to generate bromine;
- transferring said bromine into a leaching tank; and
- adding the noble metal source and a bromide into the leaching tank and leaching out at least part of the noble metal from its source.

There is no limitation to the kind of noble metal that can be leached of (extracted) by the process of the invention. The noble metals that can be recovered (leached) by the process of the invention comprise Cu, Ag, Hg, Pt, Pd and Au. The process of the invention is particularly well suited for gold recovery. Hence, in a preferred embodiment of the invention, the noble metal is gold.

The noble metal source used in the invention may be an ore of said metal; alternatively, it may be rubbish or objects coated with or otherwise containing said noble metal.

According to the invention, a bromide is first reacted with hydrogen peroxide in order to generate bromine that is transferred to the leaching tank. Typically, bromine generation happens at atmospheric pressure and at a temperature between 50 and 60°C.

The bromide used in this reaction preferably is a bromide of an alkaline metal, preferably potassium bromide because it is the easiest commercially available and the less expensive one.

As disclosed in the aforementioned US patent 5,266,295, the oxidation to bromine is more effective using hydrogen peroxide as the oxidant if a strong acid (e.g., sulphuric or phosphoric acid) is also present to increase the percent conversion of bromide to bromine. Especially sulphuric acid is efficient in the process of the invention.

In this embodiment, the hydrogen peroxide and the sulphuric acid can be used separately or they can be converted first (prior to the reaction with the bromide) to Caro's acid or peroxymonosulphuric acid ($H_2SO_5$). It is reported that using Caro's acid will reduce the hydrogen peroxide consumption as a result of more efficient use of the hydrogen peroxide. Hence, in a preferred embodiment, the strong acid is sulphuric acid and the hydrogen peroxide and the sulphuric acid are converted to Caro's acid or peroxymonosulphuric acid ($H_2SO_5$) prior to the reaction with the bromide.

In that case, said Caro's acid is preferably made on site (in the leaching plant) by mixing hydrogen peroxide and concentrated sulphuric acid in appropriate conditions which are well known from those skilled in the art. Generally, $H_2O_2$ 70%wt and $H_2OS_4$ 94-96%wt solutions are used, the latter being free of organics and metallic compounds. In industrial operation, there is generally no storage of Caro's acid, the solution manufactured flowing directly into the process stream. It is namely so that otherwise, due to Caro's acid instability, the solution must be stored at temperature below 10°C.

The hydrogen peroxide used in the present invention may also be present in an equilibrium solution involving a peracid or any other liquid peroxide derivative.

In any event, the reactions involved are the following:

1)      $2 \, KBr + H2SO4 \rightarrow K2SO4 + 2 \, HBr$

2)      $H2O2 + 2 \, HBr \rightarrow 2 \, H2O + Br2$

followed by

Or overall:

$H2O2 + 2 \, KBr + H2SO4 \rightarrow K2SO4 + 2 \, H2O + Br2$

After the reaction between bromide and hydrogen peroxide, the bromine generated is transferred to a leaching tank. Preferably, the reaction medium is then at a temperature such that the bromine generated is in gaseous form and can easily be transferred/transported to the leaching tank. For instance, said gaseous bromine can be displaced by a flow of dry air (or of an inert gas) which is blown into the reactor where the reaction took place, so that it can flow for instance through appropriate piping into the leaching tank. Hence, in a preferred embodiment of the invention, the bromine generated is in gaseous form and is displaced by a flow of dry air or of an inert gas. Alternatively, the bromine in gaseous form could be displaced by suction (under vacuum) from one tank to another through appropriate piping.

According to the invention, the noble metal source and a bromide are also added into the leaching tank. Before that, the noble metal source has generally undergone pretreatment steps (like mechanical or other separation step(s), size reduction and classification...) in order to be in the shape of particles of appropriate size.

In the frame of the invention, by "leaching" is meant an extractive metallurgy technique (also called hydrometallurgy) which converts noble metals contained in an ore or another noble metal source, into soluble compounds (generally salts) thereof generally in an aqueous media comprising a lixiviant (i.e. a reagent or mixture of reagents likely to transform the noble metal in a soluble compound thereof). Leaching is usually done in tanks or vessels which are generally cylindrical (horizontal or vertical) or of horizontal tube form, and which may work under pressure in which case they are generally known as autoclaves. They generally comprise an agitating system (impeller for instance) so that the lixiviant and the source of the noble metal can be mixed and maintained in good contact during leaching.

Leaching generally involves the use of aqueous solutions containing the lixiviant which in the frame of the invention comprises bromine and a bromide. These solutions are preferably acidic or neutral as explained in the above mentioned Conference Paper. Hence, they may comprise an acid. As acids, preferably inorganic acids are used; sulfuric, hydrochloric and nitric acid are the most commonly used, sulfuric acid being the most commonly used. However, in a preferred embodiment of the present invention, the aqueous solution containing the lixiviant has a neutral pH and hence, does not contain any acid. Hence, in a preferred embodiment of the invention, the leaching happens at a neutral pH.

In the leaching step of the process of the invention, noble metal concentration, oxidation potential (which is linked to the bromine/bromide ratio), temperature and pH of the solution are important parameters, and are often manipulated to optimize dissolution of the desired noble metal component into the aqueous phase. Generally, leaching happens at ambient temperature and pressure and at the natural pH of the medium which generally comprised between 4 and 8.

The bromide used in the leaching step preferably is of the same nature as the one used in the reaction with hydrogen peroxide. Hence, it preferably is potassium bromide.

The reaction involved with bromine/bromide leaching of gold is the following:

$$2 \, Au + 3 \, Br2 + 2 \, KBr = 2 \, KAuBr4$$

The embodiment according to which the bromide used in both the reaction and the leaching steps is potassium bromide has the advantage of allowing the recycling of bromine in the process. It is namely so that the bromine which is not consumed during the leaching step can be evaporated and scrubbed in an aqueous solution of potassium iodide so as to generate potassium bromide and iodine. These are solids which can easily be separated from each other in order to allow recycling the potassium bromide to the reaction step with hydrogen peroxide. Scrubbing generally happens at ambient temperature and pressure and with a flowrate appropriate to optimize the amount of bromine scrubbed/recovered.

In the process of the invention, the reaction step generating bromine and the leaching step generally have about the same duration. Generally, both steps last between a few minutes and a few hours, generally between 15 minutes and 5 hours, preferably between 20 minutes and 3 hours.

After the leaching, the recovery of the noble metal from the slurry can be performed using known techniques like the recourse to alpha-cyclodextrin (as described in US 2014/172667), carbon adsorption, ion exchange, solvent extraction or Zn and Al precipitation methods. The medium obtained after the noble metal extraction can then be concentrated by heating which generates additional bromine which can be recovered as detailed above (namely by scrubbing).

As to the solids (or sludge) obtained after concentration and Br2 separation, they can merely be discharged if the leaching is performed in the absence of acids and the leaching medium freed from bromine.

The Example below is meant to show some preferred embodiments of the invention without any intention of limiting its scope thereto.

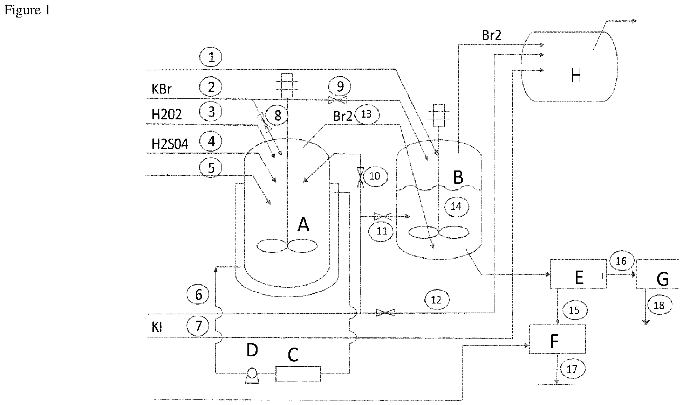

The lab installation described in Figure 1 attached was used for this Example.

This installation comprises:

- a double wall reaction vessel (A) equipped with a heating system (C) and a pumping system (D) for a heating medium that is circulated in the envelope, and with agitation means; to this vessel, which is kept at about 55°C, KBr (2, 8), H2O2 (3), H2SO4 (4), demineralized water (6, 10) and dry air (5) are fed;
- a leaching vessel (B) also equipped with agitation means; to this vessel gold ore (1), KBr (2, 9), demineralized water (6, 11) and Br2 (13) displaced from reaction vessel (A) are fed in order to obtain a slurry (14);
- filtration means (E) for separating lixiviate (15) on one hand, and sludge (16) on the other hand and means (F) for measuring the gold concentration in the lixiviate (17) and means (G) for measuring the gold concentration in the sludge (18), said means F and G being ICP (Inductive Coupled Plasma Mass Spectroscopy);
- a gas scrubber (H) with an exit to the atmosphere where Br2 evaporated from the leaching tank (B) is scrubbed with an aqueous solution made up with demineralized water (6, 12) and KI (7) so as to generate KBr and I2 according to the following reaction:

$$2KI + Br_2 \rightarrow 2KBr + I_2$$

These are solids which precipitate into the aqueous reaction medium and can easily be separated therefrom and from each other by classical separation techniques . The KBr generated there is advantageously recycled as at least part of stream (2).

In the Example, the duration of the bromine generation step and of the leaching step was of 2 hours.

The results obtained are summarized in Table 1 below from which it appears that between 72 and 88% of the gold present in the ore could be leached out using the process of the invention. In this table, ORP is the Redox potential of the medium in Volt, the other values and units given being self-explanatory.

Considering the very low level of gold present in the ore that was used, the yield of the process was calculated by two different ways. The first way consisted in measuring the gold present in the lixiviate after the leaching and hence, in calculating directly the amount of gold that could be extracted (17). The second way consisted in measuring the residual gold in the sludge and hence, in calculating the amount of gold that could not be leached (18) and deducing therefrom the amount that was effectively leached.

## Table 1

| Units/values | ore | KBr | KBr | KBr in slurry | H2O2-st50 | H2SO4 | Dry Air | DMW | Br2 | KI | DMW | DMW | DMW | slurry | lexivate | sludge | gold lexivate | gold in sludge | yield vs lexivate | yield vs sludge |
|---|---|---|---|---|---|---|---|---|---|---|---|---|---|---|---|---|---|---|---|---|
| | 1 | 2 | 8 | 9 | 3 | 4 | 5 | 6 | 13 | 7 | 10 | 11 | 12 | 14 | 15 | 16 | 17 | 18 | % | % |
| g (100%) | 500 | 65 | 40 | 25 | 5,9 | 15,6 | | 2440 | 27,7 | 37,3 | 40 | 2000 | 400 | 2500 | 2000 | 500 | | | | |
| min | | | | | 5 | 5 | | | 180 | | | | | 180 | | | | | | |
| l/min | | | | | 0,00197 | 0,00169 | | | 0,06478 | | | | | | | | | | | |
| mol/min | | | | | 0,00289 | 0,03177 | | | 0,00289 | | | | | | | | | | | |
| mol | | 0,546 | 0,336 | 0,210 | 0,174 | 0,159 | | | 0,174 | 0,225 | 2,222 | | | | | | | | | |
| ml | | | | | 9,86 | 8,47 | | | 3887,06 | | | | | | | | | | | |
| barg | | | | | | | 1 | | | | | | | | | | | | | |
| pH | | | | | | | | | | | | | | 4-5 | | | | | | |
| ORP(V) | | | | | | | | | | | | | | 0,96 | | | | | | |
| Au(mgA) | 3,25 | | | | | | | | | | | | | 3,25 | | | 2,86 | 0,90 | 88 | 72 |

EP 3 336 207 A1

**Claims**

1. Process for leaching a noble metal from a source thereof, said process comprising the following steps:

   - reacting a bromide with hydrogen peroxide in order to generate bromine;
   - transferring said bromine into a leaching tank; and
   - adding the noble metal source and a bromide into the leaching tank and leaching out at least part of the noble metal from its source.

2. Process according to claim 1, in which the noble metal is gold.

3. Process according to claim 1 or 2, wherein the bromide used in the reaction with hydrogen peroxide is a bromide of an alkaline metal, preferably potassium bromide.

4. Process according to any of the preceding claims, wherein a strong acid, preferably sulphuric acid, is also present during the reaction of the bromide with hydrogen peroxide.

5. Process according to claim 4, wherein the strong acid is sulphuric acid and wherein the hydrogen peroxide and the sulphuric acid are converted to Caro's acid or peroxymonosulphuric acid ($H_2SO_5$) prior to the reaction with the bromide.

6. Process according to any of the preceding claims, wherein the bromine generated is in gaseous form and is displaced by a flow of dry air or of an inert gas.

7. Process according to any of the preceding claims, wherein the leaching happens at a neutral pH.

8. Process according to any of the preceding claims, wherein the bromide used for leaching is of the same nature as the one used in the reaction with hydrogen peroxide and preferably is potassium bromide.

9. Process according to claim 8, wherein the bromine which is not consumed during leaching is evaporated and scrubbed with an aqueous solution of potassium iodide so as to generate potassium bromide and iodine,

10. Process according to claim 9, wherein said potassium bromide and iodine are separated from each other and wherein the potassium bromide so obtained is recycled to the reaction step with hydrogen peroxide.

Figure 1

Europäisches
Patentamt

European
Patent Office

Office européen
des brevets

# EUROPEAN SEARCH REPORT

**Application Number**

EP 16 20 4346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | M. MELASHVILI ET AL.: "Study of gold leaching with bromine and bromide and the influence of sulphide minerals on this reaction", CONFERENCE: COM 2014, October 2014 (2014-10), XP002770304, * the whole document * | 1-10 | INV. C22B3/10 C22B3/00 C22B11/00 |
| A | CA 1 340 169 C (GREAT LAKES CHEMICAL CORP [US]) 8 December 1998 (1998-12-08) * the whole document * | 1-10 | |
| A | US 2 283 198 A (FINK COLIN G ET AL) 19 May 1942 (1942-05-19) * the whole document * | 1-10 | |

TECHNICAL FIELDS
SEARCHED     (IPC)

C22B

The present search report has been drawn up for all claims

| Place of search | Date of completion of the search | Examiner |
|---|---|---|
| Munich | 18 May 2017 | Swiatek, Ryszard |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 16 20 4346

This annex lists the patent family members relating to the patent documents cited in  the above-mentioned European search report.
The members are as contained in the European Patent Office EDP file on
The European Patent Office is in no way liable for these particulars which are merely given for the purpose of information.

18-05-2017

| Patent document cited in search report | | Publication date | Patent family member(s) | | Publication date |
|---|---|---|---|---|---|
| CA 1340169 | C | 08-12-1998 | CA | 1340169 C | 08-12-1998 |
| | | | RU | 2102507 C1 | 20-01-1998 |
| | | | ZA | 9006900 B | 27-05-1992 |
| US 2283198 | A | 19-05-1942 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5266295 A
- US 20140230604 A
- US 2014172667 A